# FASCICULE DE BREVET EUROPEEN

(11) **EP 3 252 782 B1**
(45) Date de publication et mention de la délivrance du brevet: **31.05.2023**
(21) Numéro de dépôt: 17168631.4
(22) Date de dépôt: 28.04.2017
(51) Int. Cl.: H01F 1/00

(54) **NANOCOMPOSITE ET PROCÉDÉ D'OBTENTION ASSOCIÉ**
NANOVERBUNDMATERIAL UND ENTSPRECHENDES HERSTELLUNGSVERFAHREN
NANOCOMPOSITE AND ASSOCIATED PRODUCTION METHOD

(30) Priorité: 03.05.2016 FR 1654020
(43) Date de publication de la demande: 06.12.2017
(73) Titulaire: Commissariat à l'Energie Atomique et aux Energies Alternatives, 75015 Paris (FR)
(72) Inventeur: VIALA, Bernard, 38360 SASSENAGE (FR)
(74) Mandataire: Hautier IP

(56) Documents cités:
- US-A1- 2012 038 532
- TAKACS H ET AL: "Non-conductive ferromagnetic carbon-coated (Co, Ni) metal/polystyrene nanocomposites films", JOURNAL OF APPLIED PHYSICS, AMERICAN INSTITUTE OF PHYSICS, US, vol. 119, no. 9, 7 mars 2016 (2016-03-07), XP012205780, ISSN: 0021-8979, DOI: 10.1063/1.4942862 [extrait le 1901-01-01]
- Hélène Takacs ET AL: "Non-conductive ferromagnets based oncore double-shell nanoparticles forradio-electric applications Background", , XP055345832, DOI: 10.1186/s40064-016-2099-3 Extrait de l'Internet: URL:http://download.springer.com/static/pd f/395/art%3A10.1186%2Fs40064-016-2099-3.pd f?originUrl=http://springerplus.springerop en.com/article/10.1186/s40064-016-2099-3&t oken2=exp=1487088018~acl=/static/pdf/395/a rt%253A10.1186%252Fs40064-016-2099-3.pdf*~ hmac=fb8b50763a25052fb4b67c6f88f72edec9941 44cea7e94c [extrait le 2017-02-14]
- TAKACS H ET AL: "New Approach to Closely Spaced Disordered Cobalt-Graphene Polymer Nanocomposites for Non-Conductive RF Ferromagnetic Films", IEEE TRANSACTIONS ON MAGNETICS, IEEE SERVICE CENTER, NEW YORK, NY, US, vol. 51, no. 11, 1 novembre 2015 (2015-11-01), pages 1-4, XP011587661, ISSN: 0018-9464, DOI: 10.1109/TMAG.2015.2445824 [extrait le 2015-10-23]

## Description

### DOMAINE TECHNIQUE DE L'INVENTION

La présente invention concerne le domaine de la microélectronique et plus particulièrement le domaine de la fabrication de composants microélectroniques pour circuit intégré fonctionnant à haute fréquence. Elle trouvera pour application avantageuse la réalisation d'inductances, et plus particulièrement de micro-inductances, à haute densité d'inductance et à haut facteur de qualité, en particulier à une fréquence d'utilisation supérieure à 1 GHz, voire supérieure à 5 GHz.

### ÉTAT DE LA TECHNIQUE

Effectivement, la fréquence d'utilisation des composants microélectroniques, et en particulier des micro-inductances, est de nos jours d'environ 1 à 2 GHz.

A ces fréquences l'utilisation de nanoparticules d'alliage magnétique dit doux, dont l'anisotropie magnéto-cristalline est relativement faible, semble permettre l'obtention de nanocomposites destinés à être isolant électriquement ayant une perméabilité élevée et une tenue en fréquence satisfaisante (Cf. l'article de C. YANG et al., intitulé « On-chip RF inductors with magnetic nanoparticles medium », publié en 2011 dans la revue « Solid-State Sensors, Actuators and Microsystems Conférence (TRANSDUCERS) » (16th International, IEEE, 2011, p. 2801-2804)).

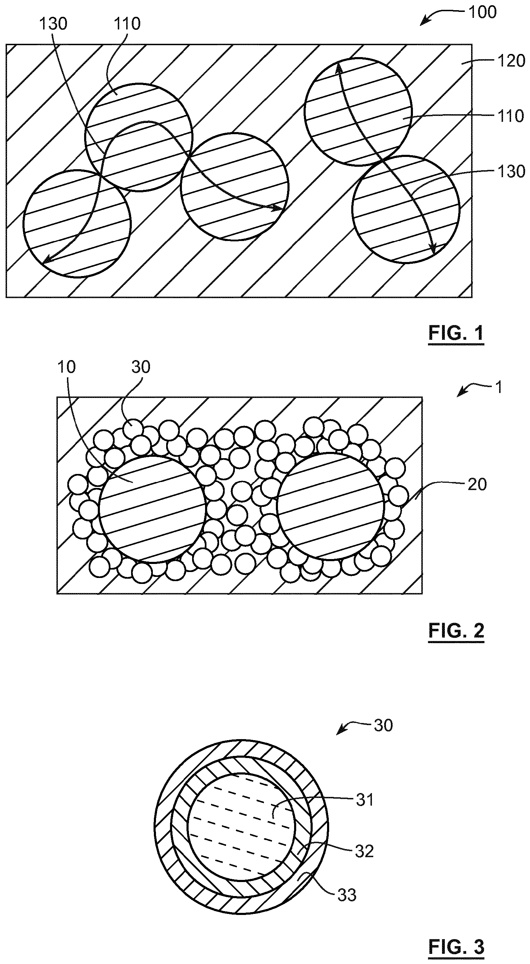

Cependant, ces nanocomposites présentent une conductivité résiduelle trop élevée. En référence à la figure 1, ce problème de conductivité est vraisemblablement dû à l'agglomération des nanoparticules d'alliage magnétique doux 110 dans la résine photosensible 120 constituant la matrice isolante du milieu magnétique 100 proposé par C. Yang et al. Plus particulièrement, les nanoparticules 110 formeraient en se contactant des chemins de conduction électrique 130 (représentés sur la figure 1 par des courbes en double flèche) à l'intérieur du nanocomposite.

Il est nécessaire de limiter la longueur de ces chemins de conduction électrique 300 à une valeur inférieure à 200 nm pour éviter la formation de micro-courants induits au-delà d'une fréquence d'utilisation de 1 GHz. Il faut donc éviter que deux ou trois nanoparticules 100 se touchent au sein du nanocomposite.

Il est par ailleurs connu, du document de brevet référencé US 2012/038532 A1, un matériau magnétique noyau-enveloppe comprenant : un élément magnétique dans lequel plusieurs particules magnétiques noyau-enveloppe sont liées par un liant constitué d'une première résine ; et une couche de revêtement qui est constituée d'une seconde résine différente de la première résine, une surface de l'élément magnétique étant recouverte de la couche de revêtement. Le matériau magnétique noyau-enveloppe est plus particulièrement tel que chaque particule magnétique noyau-enveloppe comprend une particule métallique magnétique et une couche de revêtement qui recouvre au moins une partie d'une surface de la particule métallique magnétique, la particule métallique magnétique contient au moins un métal magnétique sélectionné parmi un groupe constitué de Fe, Co et Ni, et la couche de revêtement est constituée d'un oxyde, d'un nitrure ou d'un carbure qui contient au moins un métal magnétique.

Aucune solution n'est actuellement connue qui permette d'atteindre une suffisance en termes d'isolation électrique de ces nanoparticules.

L'objet de l'invention est de répondre, au moins en partie, à la limitation précédemment citée. Selon un premier aspect, l'objet de l'invention est de fournir un matériau magnétique bon isolant électrique et à grande perméabilité à haute fréquence. Selon un deuxième aspect, l'objet de l'invention est de fournir un procédé industriel d'obtention dudit matériau magnétique.

Par « bon isolant électrique », on entend une résistivité supérieure à 10³ µOhm.cm, et avantageusement supérieure à 10⁶ µOhm.cm.

Par « grande perméabilité », on entend une perméabilité relative µ_{R} supérieure à 2, et avantageusement supérieure à 10.

Par « haute fréquence », on entend une fréquence supérieure à 1 GHz, et avantageusement supérieure à 5 GHz, voire supérieure à 10 GHz.

Il est en outre souhaité que le matériau magnétique dissipe peu d'énergie à haute fréquence. A titre indicatif, il est souhaité que les pertes magnétiques totales aient un angle de pertes δ dont la tangente aurait une valeur inférieure à 10⁻¹, et avantageusement inférieure à 10⁻².

### RÉSUMÉ DE L'INVENTION

Pour atteindre au moins en partie cet objectif, il est proposé un nanocomposite comprenant :
- Des nanoparticules d'alliage magnétique au moins en partie constituées d'un alliage magnétique doux, et
- Une matrice isolante supportant les nanoparticules d'alliage magnétique, le nanocomposite étant essentiellement tel qu'il comprend en outre des nanoparticules isolantes supportées par la matrice et intercalées entre les nanoparticules d'alliage magnétique de manière à espacer lesdites nanoparticules d'alliage magnétique les unes des autres et ainsi assurer seules l'isolation électrique desdites nanoparticules d'alliage magnétique et supprimer les chemins de conduction électrique de longueur supérieure à 200 nm.

On entend par « nanocomposite » un matériau solide multiphasé dont une des phases a au moins une dimension inférieure à 1 µm.

Par la suite, on entend par « nanoparticules d'alliage magnétique doux » des nanoparticules comprenant un matériau ferromagnétique doux à faible anisotropie magnéto-cristalline capable de s'aimanter spontanément lorsqu'il est soumis à un champ magnétique extérieur de faible intensité ; toutefois, l'action de créer ou d'annuler l'aimantation dans ce matériau nécessite moins d'énergie que pour les matériaux ferromagnétiques à plus grande anisotropie, appelés ici durs. Les matériaux ferromagnétiques doux ont un champ coercitif H_{C} très faible et une forte susceptibilité, alors que les matériaux ferromagnétiques durs ont un champ coercitif élevé et une faible susceptibilité. Le cycle d'hystérésis des matériaux ferromagnétiques doux est donc plus étroit que celui des matériaux ferromagnétiques durs. L'aire représentée à l'intérieur du cycle correspond aux pertes hystérétiques lorsque le matériau effectue un cycle complet. Ces pertes magnétiques se traduisent principalement en émission de chaleur. Elles augmentent avec la fréquence et sont problématiques pour un grand nombre d'applications. On comprend donc que les matériaux ferromagnétiques doux soient utilisés pour des applications travaillant en fréquence car leur cycle est étroit et donc les pertes sont minimisées. Par souci de concision, les nanoparticules d'alliage magnétique doux pourront par la suite être appelées « particules douces ».

Le nanocomposite selon l'invention constitue ainsi un matériau magnétique bon isolant électrique et à grande perméabilité à haute fréquence. En effet, du fait que les nanoparticules isolantes sont intercalées entre les nanoparticules d'alliage magnétique, les chemins de conduction électrique (référencés 130 sur la figure 1) de trop grande longueur (supérieure à 200 nm) sont supprimés. Par rapport au nanocomposite proposé par C. Yang et al., le nanocomposite selon l'invention présente une perméabilité équivalente et une meilleure isolation électrique.

Ainsi, l'invention selon son premier aspect est particulièrement avantageuse pour la réalisation de micro-inductances à haute densité d'inductance et à haut facteur de qualité, en particulier à haute fréquence d'utilisation.

Selon une particularité de l'invention, au moins une nanoparticule isolante comprend un coeur constitué d'un élément ferromagnétique, tel que le cobalt Co, le fer Fe ou le nickel Ni, une première coquille en carbone ou en graphène entourant le coeur et une deuxième coquille en polymère, tel que le polystyrène, entourant la première coquille.

Le nanocomposite selon cette particularité est caractéristique en ce sens qu'il comprend deux populations de nanoparticules magnétiques distinctes. Les nanoparticules isolantes selon cette particularité sont communément appelées « nanoparticules ferromagnétiques dures » du fait que chacune d'entre elles comprend un coeur en un élément ferromagnétique connu pour présenter une anisotropie magnéto-cristalline supérieure à celle des alliages magnétiques doux. Par la suite, ces nanoparticules ferromagnétiques dures seront parfois appelées « particules dures », par souci de concision. Ces particules dures participent avantageusement aux propriétés magnétiques du nanocomposite selon le premier aspect de l'invention, en conservant sa perméabilité, tout en augmentant son caractère bon isolant électrique.

Le deuxième aspect de la présente invention concerne un procédé d'obtention d'un nanocomposite tel qu'introduit ci-dessus. Ledit procédé est essentiellement tel qu'il comprend :
- La préparation d'une solution de nanoparticules d'alliage magnétique au moins en partie constituées d'un alliage magnétique doux,
- La préparation d'une solution mère de matrice isolante,
- La préparation d'une solution de nanoparticules isolantes,
- Un premier mélange de la solution mère de matrice et de la solution de nanoparticules isolantes,
- Un deuxième mélange de la solution de nanoparticules d'alliage magnétique et du premier mélange,
la préparation de la solution de nanoparticules d'alliage magnétique comprenant la mise en suspension des nanoparticules d'alliage magnétique dans un solvant par sonication.

Par dispositif ou composant microélectronique, on entend tout type de dispositif réalisé avec des moyens de la microélectronique. Ces dispositifs englobent notamment en plus des dispositifs à finalité purement électronique, des dispositifs micromécaniques ou électromécaniques (MEMS, NEMS...) ainsi que des dispositifs optiques ou optoélectroniques (MOEMS...).

Les autres objets, caractéristiques et avantages de la présente invention apparaîtront à l'examen de la description suivante et des dessins d'accompagnement. Il est entendu que d'autres avantages peuvent être incorporés tant qu'ils restent limités par la portée du jeu de revendications.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
- la figure 1 représente une vue en coupe d'une portion de nanocomposite magnétique selon l'art antérieur,
- la figure 2 représente une vue en coupe d'une portion nanocomposite magnétique selon un mode de réalisation de l'invention,
- la figure 3 représente une vue en coupe d'une nanoparticule ferromagnétique dure selon un mode de réalisation de l'invention, et
- la figure 4 représente un organigramme du procédé d'obtention d'un nanocomposite selon un mode de réalisation de l'invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, les épaisseurs relatives des différentes couches ne sont pas nécessairement représentatives de la réalité.

### DESCRIPTION DÉTAILLÉE DE L'INVENTION

De manière facultative, l'invention selon son premier aspect peut présenter au moins l'une quelconque des caractéristiques optionnelles suivantes :
- Le rapport du diamètre des nanoparticules d'alliage magnétique sur le diamètre des nanoparticules isolantes est compris entre 1 et 10, de préférence entre 2 et 4.
- Le diamètre des nanoparticules d'alliage magnétique est compris entre 100 nm et 200 nm ; ainsi une particule douce isolée ne créée pas de chemins de conduction d'une longueur supérieure à 200 nm et présentent une taille suffisante pour présenter une pluralité de domaines magnétiques, favorisant ainsi l'obtention d'un nanocomposite présentant une grande perméabilité.
- Le diamètre des nanoparticules isolantes est compris entre 10 nm et 70 nm, de préférence entre 20 nm et 50 nm.
- Les nanoparticules d'alliage magnétique sont constituées d'un alliage choisi parmi un alliage à base de nickel et de fer comme le permalloy et le supermalloy, d'un alliage à base de fer, d'un alliage à base de cobalt, et d'un alliage à base de fer et de cobalt, ces alliages pouvant éventuellement contenir un ou plusieurs éléments d'addition notamment choisis parmi l'aluminium Al, le cuivre Cu, le silicium Si, le titane Ti, le tantale Ta, le molybdène Mo, le bore B, le carbone C et l'azote N.
- La matrice comprend un polymère non conducteur, tel que le polystyrène, le polybutadiène, le polyméthacrylate et les copolymères de polystyrène-méthacrylate, ou tout autre polymère à base de polyéthylène, de polyester, de polyméthylène, de polyuréthane, de polyvinylidène, ou de polyépoxyde.
- Le nanocomposite se présente sous la forme d'au moins un film d'une épaisseur comprise entre 0,1 µm et 100 µm, et avantageusement entre 1 et 20 µm et ayant une fraction massique en métal égale à au moins 50 % et avantageusement 70% voire 90 % et/ou une fraction volumique en métal égale à au moins 15 %, et avantageusement 20% voire 25 %.

De manière facultative, l'invention selon son deuxième aspect peut présenter au moins l'une quelconque des caractéristiques optionnelles suivantes :
- La solution de nanoparticules d'alliage magnétique présente une concentration massique comprise entre 0,01 et 0,05 g/mL, de préférence égale à 0,025 g/mL, et/ou la solution de nanoparticules isolantes présente une concentration massique comprise entre 0,05 et 0,2 g/mL de préférence égale à 0,1 g/mL.
- La puissance de sonication de la solution de nanoparticules d'alliage magnétique est comprise entre 100 et 250 W, de préférence égale à 200 W, et la durée de sonication est inférieure à 10 min, de préférence égale à 2 min.
- La préparation de la solution de nanoparticules d'alliage magnétique est réalisée après le premier mélange.
- Le procédé comprend en outre la déposition d'un film du deuxième mélange notamment par enduction centrifuge et le séchage du film notamment sur une plaque chauffante.

Selon une particularité du procédé, chaque nanoparticule isolante comprenant un coeur constitué d'un élément ferromagnétique, tel que le cobalt Co, le fer Fe ou le nickel Ni, une première coquille en carbone ou en graphène entourant le coeur et une deuxième coquille en polymère, tel que le polystyrène, entourant la première coquille, la préparation de la solution de nanoparticules isolantes comprend :
- la mise en suspension de nanoparticules comprenant chacune ledit coeur et ladite première coquille dans un solvant par sonication d'une puissance comprise entre 50 et 150 W, de préférence égale à 100 W, et d'une durée inférieure à 30 min, de préférence égale à 10 min, puis
- le greffage de ladite deuxième coquille sur chaque nanoparticule précédemment mise en suspension par l'introduction d'un polymère de fonctionnalisation comprenant au moins une terminaison styrène ou anthracène, tel que du polystyrène, du polybutadiène, polyméthacrylate et les copolymères de polystyrène-méthacrylate, en maintenant une sonication d'une puissance comprise entre 50 et 150 W, de préférence égale à 100 W, et d'une durée inférieure à 30 min, de préférence égale à 10 min.

De manière facultative, cette particularité de l'invention selon son deuxième aspect peut en outre présenter au moins l'une quelconque des caractéristiques optionnelles suivantes :
- le premier mélange de la solution mère de matrice et de la solution de nanoparticules isolantes est réalisé par introduction de la solution mère de matrice dans la solution de nanoparticules isolantes, la sonication de cette dernière étant maintenue à une puissance comprise entre 50 et 150 W, de préférence égale à 100 W, et pour une durée inférieure à 30 min, de préférence égale à 10 min ;
- le deuxième mélange de la solution de nanoparticules d'alliage magnétique et du premier mélange est réalisé dans un laps de temps inférieure à 10 min, de préférence inférieur à 3 min, après la préparation de la solution de nanoparticules d'alliage magnétique, la sonication du premier mélange étant de préférence maintenue à une puissance comprise entre 50 et 150 W, de préférence égale à 100 W, et pour une durée inférieure à 30 min, de préférence égale à 10 min.

Selon une particularité du procédé, la sonication est réalisée en plongeant une sonde à ultra-sons directement dans la solution concernée.

Les valeurs dimensionnelles ou les valeurs de rapport données ci-dessous s'entendent comme des valeurs données aux erreurs de mesure près. Ces valeurs peuvent par exemple varier de plus ou moins 5% sans départir de l'invention telle que revendiquée.

Comme illustré sur la figure 2, le nanocomposite 1 selon le premier aspect de l'invention comprend essentiellement :
- Des nanoparticules d'alliage magnétique 10,
- Une matrice 20 isolante ou résistive, et
- Des nanoparticules isolantes 30.

Les nanoparticules d'alliage magnétique 10 sont de préférence constituées au moins en partie d'un alliage magnétique doux, tel qu'un alliage à base de nickel et de fer comme le permalloy ou le supermalloy, par exemple de formule Ni₈₀Fe₁₇Mo₃, notamment commercialisé sous forme de poudre. Elles peuvent également être constituées d'un alliage à base de fer, tel qu'un alliage fer-nickel (riche en fer), d'un alliage à base de cobalt, d'un alliage à base de fer et de cobalt ou d'un alliage à base de nickel tel qu'en alliage nickel-fer (riche en nickel) avec éventuellement un ou plusieurs éléments d'addition notamment choisis parmi l'aluminium Al, le cuivre Cu, le silicium Si, le titane Ti, le tantale Ta, le molybdène Mo, le bore B, le carbone C et l'azote N.

La matrice 20 peut comprendre un polymère, tel que le polystyrène ou le polyéthylène (ex PET), le polyester, le polyméthylène (ex PMMA, PEO) le polyuréthane, le polyvinylidène (ex PVDF, P(VDF-TrFE)), le polyépoxyde, leurs dérivés et copolymères.

Les nanoparticules isolantes (non magnétiques) 30 peuvent comprendre des nanoparticules de polymère, tel que le polystyrène et/ou le polyester, et/ou des nanoparticules à base de silice, d'alumine ou d'oxyde métalliques comme le dioxyde de titane. Les nanoparticules isolantes (faiblement magnétiques) 30 peuvent comprendre des nanoparticules de ferrites à base d'oxydes de fer (Fe2O3), de nickel (NiO) ou de cobalt (Co3O4).

Les nanoparticules 10, 30 sont supportées dans la matrice 20.

Les nanoparticules isolantes 30 sont intercalées entre les nanoparticules d'alliage magnétique 10. Par exemple, plusieurs nanoparticules isolantes 30 entourent, recouvrent ou enrobent au moins partiellement chaque nanoparticule d'alliage magnétique 10. Comme cela est illustré sur la figure 2, chaque élément de surface extérieure de chaque nanoparticule d'alliage magnétique 10 n'est pas nécessairement en contact avec des nanoparticules isolantes 30. Il est suffisant que les nanoparticules isolantes 30 permettent d'espacer les nanoparticules d'alliage magnétique 10 les unes des autres pour assurer leur isolation électrique.

La survenance de chemins de conduction électrique d'une longueur multiple du diamètre des particules douces 10 est ainsi prévenue, et le nanocomposite 1 résout le problème de fournir un matériau magnétique à grande perméabilité à haute fréquence et bon isolant électrique.

Selon une variante avantageuse, tout ou partie de ces nanoparticules isolantes 30 ne possédant pas de propriétés magnétiques ou possédant des propriétés magnétiques faibles (caractéristiques des ferrimagnétiques) peut être remplacé par des nanoparticules isolantes présentant des propriétés ferromagnétiques permettant notamment d'augmenter la perméabilité du nanocomposite 1, tout en conservant son caractère bon isolant électrique.

En effet, comme illustré sur la figure 3, au moins une nanoparticule isolante 30 peut comprendre un coeur 31 constitué d'un élément ferromagnétique, une première coquille 32 entourant le coeur 31 et une deuxième coquille 33 en une matière isolante entourant la première coquille 32.

La première coquille 32 étant par exemple en carbone ou en graphène permet notamment de protéger le coeur 31 contre l'oxydation. Le coeur 31 et la première coquille 32 forment par exemple une particule dure Co/C. Il peut s'agir également de nanoparticules de Fe/C ou de Ni/C. Avantageusement, la première coquille 32 peut également permettre une fonctionnalisation de surface permettant le greffage subséquent de la deuxième coquille 33.

La deuxième coquille 33 est par exemple constituée d'un polymère non conducteur, tel que le polystyrène, un polymère à base de polyéthylène, polyester, polyméthylène, polyuréthane, polyvinylidène, polyépoxydes, polybutadiène, polyméthacrylate ou les copolymères de polystyrène-méthacrylate. La deuxième coquille 33 est destinée à permettre d'isoler électriquement chaque particule dure 30. Le coeur 31, la première coquille 32 et la deuxième coquille 33 forment une nanoparticule isolante 30, aussi appelée par la suite « particule dure fonctionnalisée ».

Le nanocomposite 1 selon cette variante avantageuse est notamment caractéristique en ce sens qu'il comprend au moins deux populations de nanoparticules magnétiques distinctes ; les proportions entre ces deux populations contribuant à permettre de moduler la grande perméabilité et la haute fréquence d'utilisation du nanocomposite 1 qu'ils composent en partie.

L'utilisation de particules dures fonctionnalisées 30 est encore avantageuse en ce que ces dernières ont tendance à s'agréger spontanément par couplage magnétostatique tout autour des particules douces 10 pour mieux les enrober.

La représentation choisie sur la figure 2 se veut relativement réaliste en ce sens que les nanoparticules 10, 30 du nanocomposite 1 présentent des dimensions caractéristiques particulières. En particulier, les nanoparticules 10, 30 ont de préférence une forme sphérique.

Notons tout d'abord qu'il est souhaitable que les nanoparticules 10, 30 aient une dimension supérieure à la limite superparamagnétique, soit pour simplifier un diamètre moyen supérieur à 5 nm. Une borne supérieure à ce diamètre moyen peut être imposée pour constituer une limite supérieure à la longueur des micro-courants induits, soit par exemple un diamètre moyen inférieur à 200 nm.

Concernant le coeur 31 des particules dures protégées contre l'oxydation par la première coquille 32, on peut retenir une limite inférieure égale à 10 nm et une limite supérieure égale à 70 nm. La deuxième coquille 33 est d'une épaisseur nanométrique, par exemple comprise entre 2 et 10 nm, de préférence égale à 4 nm. De préférence, le diamètre moyen des particules dures fonctionnalisées 30 est compris entre 20 et 50 nm. Ces limites sont celles obtenues usuellement avec des procédés de fabrication industrielle connus.

Concernant les particules douces 10, elles sont de préférence de plus grande taille et il est avantageux d'avoir des particules de grand diamètre de sorte qu'elles présentent chacune une multiplicité de domaines magnétiques. Dès lors, s'il est envisagé d'utiliser des particules douces 10 présentant un diamètre minimum égal à 50 nm, il est préférable d'imposer, au diamètre moyen des particules douces, une limite inférieure égale à 100 nm. Le diamètre des particules douces 10 est donc de préférence compris entre 100 et 200 nm.

La représentation choisie sur la figure 2 se veut relativement réaliste également en ce sens que le nanocomposite 1 est préférentiellement constitué d'un faible nombre de particules douces 10 et d'un grand nombre de nanoparticules isolantes 30. L'enjeu est d'obtenir un bon recouvrement des particules douces 10, non isolées électriquement, par les nanoparticules isolantes 30 et de répondre dans le même temps à des conditions de fabrication avantageusement industrielles.

Il faut en effet un certain nombre de nanoparticules isolantes 30 pour enrober une particule douce 10. Ce nombre dépend fortement du rapport de leurs diamètres moyens respectifs. On considère ici et par la suite le rapport du diamètre des nanoparticules d'alliage magnétique doux 10 sur le diamètre des nanoparticules isolantes 30. Par exemple, pour une valeur de ce rapport égale à 1, il faut au minimum 9 nanoparticules isolantes 30 pour enrober une particule douce 10 ; pour un rapport égal à 2, il faut environ 15 nanoparticules isolantes 30 ; et pour un rapport égal à 10, il en faut approximativement une centaine.

Une estimation correspondante des proportions en masse des populations de nanoparticules 10, 30 entre elles peut être donnée à titre indicatif. Par exemple, pour une masse totale de particules de 1 g :
- un rapport de leurs diamètres moyens respectifs égal à 1 induit une masse de nanoparticules isolantes égale à 940 mg et donc une masse de particules douces égale à 60 mg ;
- un rapport de leurs diamètres moyens respectifs égal à 2 induit une masse de nanoparticules isolantes égale à 750 mg et donc une masse de particules douces égale à 250 mg ;
- un rapport de leurs diamètres moyens respectifs égal à 3 induit une masse de nanoparticules isolantes égale à 660 mg et donc une masse de particules douces égale à 340 mg ;
- un rapport de leurs diamètres moyens respectifs égal à 5 induit une masse de nanoparticules isolantes égale à 340 mg et donc une masse de particules douces égale à 660 mg ; et
- un rapport de leurs diamètres moyens respectifs égal à 10 induit une masse de nanoparticules isolantes égale à 200 mg et donc une masse de particules douces égale à 800 mg.

On constate ainsi que, pour un rapport de taille égal ou inférieur à 1, on devra avoir recours à de très faibles proportions en masse de particules douces 10 ; à l'inverse pour un rapport de taille supérieur à 10, on devra avoir recours à de très fortes proportions en masse de particules douces 10. Ces deux cas extrêmes ne sont pas particulièrement avantageux en termes de fiabilité et de reproductibilité du procédé d'obtention du nanocomposite 1. Il est donc préférable que le rapport de taille soit compris entre 2 et 10. A l'intérieur de cette plage, on constate, que pour un rapport de taille égal ou supérieur à 5, la masse en particules douces devient dominante ; or, dans une solution comprenant une masse de particules douces 10 supérieure à la masse de nanoparticules isolantes 30, les particules douces auront tendance à sédimenter rapidement. Il est donc particulièrement avantageux de se restreindre à un rapport du diamètre des particules douces 10 sur le diamètre des nanoparticules isolantes 30 compris entre 2 et 4. De façon correspondante, il paraît avantageux de se restreindre à un rapport de la masse de nanoparticules isolantes 30 sur la masse de particules douces 10 supérieur à 1 et/ou inférieur à 6.

Le nanocomposite 1 obtenu dans les limites fixées ci-dessus peut avantageusement se présenter sous la forme sous la forme d'au moins un film d'une épaisseur comprise entre 0,1 µm et 100 µm, et avantageusement entre 1 et 20 µm. Le nanocomposite 1 obtenu dans les limites fixées ci-dessus peut avoir une fraction massique en métal égale à au moins 50 % et avantageusement 70%, voire 90 %, et/ou une fraction volumique en métal égale à au moins 15 %, et avantageusement 20%, voire 25 %, ce qui est avantageusement proche du maximum théorique.

Un mode de réalisation particulièrement fonctionnel du procédé d'obtention 1000 d'un nanocomposite 1 tel que décrit ci-dessus va maintenant être décrit.

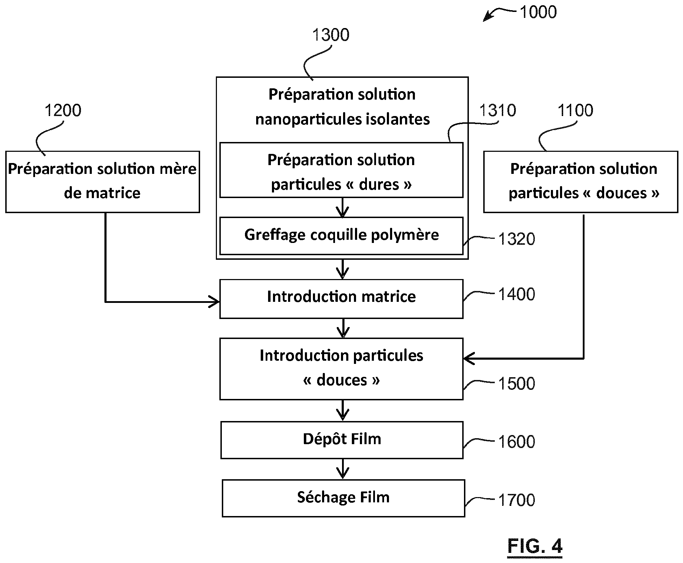

De façon essentielle, et comme représenté sur la figure 4, le procédé d'obtention 1000 du nanocomposite 1 comprend :
- Une préparation 1100 d'une solution de nanoparticules d'alliage magnétique doux 10,
- Une préparation 1200 d'une solution mère de matrice 20 isolante ou résistive,
- Une préparation 1300 d'une solution de nanoparticules isolantes 30,
- Un premier mélange 1400 de la solution mère de matrice 20 et de la solution de nanoparticules isolantes 30, et
- Un deuxième mélange 1500 de la solution de nanoparticules d'alliage magnétique doux 10 et du premier mélange.

Il peut en outre comprendre :
- Une déposition 1600 d'un film du deuxième mélange notamment sur une plaque en matériau semi-conducteur par exemple par enduction centrifuge, et
- Un séchage 1700 du film notamment sur une plaque chauffante.

Sans préjudice à la portée des revendications annexées, un exemple particulièrement fonctionnel de réalisation du procédé selon l'invention, et plus particulièrement de chacune des étapes 1100 à 1700, est donné ci-dessous. En particulier, tous les chiffres donnés ci-dessous pour décrire chacune des étapes 1100 à 1700 ne le sont qu'à titre d'exemple.

L'exemple décrit ci-dessous est basé sur une masse de poudre métallique de départ de 1 g dont 200 mg de particules douces 10 et 800 mg de particules dures ; cette proportion massique correspond à un rapport du diamètre des particules douces 10 sur le diamètre des particules dures égal à 2, pour pouvoir atteindre un enrobage satisfaisant des particules douces 10 par les particules dures fonctionnalisées 30. Le volume de solution préparé est de 20 mL.

Selon l'exemple, la préparation 1100 de la solution de particules douces 10 a pour objet la mise en suspension de ces particules dans un solvant, tel que du chloroforme ou de l'anisole (8 mL). Elle peut plus particulièrement consister à mettre en suspension une masse de 200 mg d'une poudre de particules de formule Ni₈₀Fe₁₇Mo₃ présentant un diamètre moyen de 70 nm pour obtenir une solution diluée, par exemple d'une concentration égale à 0,025 g/mL. Cette mise en suspension est de préférence réalisée par sonication, par exemple en plongeant une sonde à ultra-sons directement dans la solution. Les particules douces 10 ont moins tendance que les particules dures à s'agglomérer. En outre, contrairement aux particules dures, elles ne sont pas protégées contre l'oxydation. Par conséquent, la durée de sonication peut avantageusement être limitée à 2 min. Par ailleurs, la puissance de sonication peut atteindre 200 W, sans que les particules douces 10 ne soient endommagées. Le résultat de cette préparation 1100 est une suspension homogène de particules douces 10 présentant un temps de sédimentation limité à quelques minutes. Etant donné ce court temps de sédimentation, il est souhaitable que la préparation 1100 de la solution de particules douces 10 soit réalisée après le premier mélange 1400.

Selon l'exemple, la préparation 1200 de la solution mère de matrice 20 peut consister à dissoudre 3g de granules de polystyrène, de masse molaire égale à 35 kg/mol, dans un solvant de chloroforme ou d'anisole (4 mL) pour obtenir une solution translucide de polystyrène d'une concentration égale à 0,75 g/mL. Une durée de dissolution supérieure à 12 h, voire de 24 h, est souhaitable pour obtenir une solution homogène. Dans le même but, la dissolution est de préférence réalisée dans un bain à ultrasons ; l'usage d'une sonde à ultra-sons plongée directement dans la solution n'est pas exclue, mais pas non plus nécessaire. La solution obtenue servira de base à la matrice 20 d'enrobage final du nanocomposite 1.

Selon l'exemple, la préparation 1300 d'une solution de nanoparticules isolantes 30 a pour objet la mise en suspension 1310 de particules dures dans un solvant et le greffage 1320 d'une coquille isolante 33 autour des particules dures en suspension.

La mise en suspension 1310 peut plus particulièrement consister à mettre en suspension, dans du chloroforme ou de l'anisole (8 mL), une masse de 800 mg d'une poudre sèche de particules de Co/C présentant un diamètre moyen de 30 nm pour obtenir une solution concentrée, par exemple d'une concentration égale à 0,1 g/mL. Les particules dures ont tendance à s'agglomérer à cause de très fortes interactions magnétostatiques entre elles. Il est donc souhaitable, sinon nécessaire, dans le but d'obtenir une suspension homogène, de procéder par sonication, notamment en utilisant une sonde à ultra-sons plongée directement dans la solution. Il a été montré que les conditions de sonication optimales, ne conduisant pas à la dégradation de la coquille de protection 32 en carbone des particules dures, correspondent à une puissance de sonication de 100 W qui peut être maintenue en continue pendant 30 min. La durée optimale de sonication pour cette étape 1310 est de 10 min. Une sonication en mode pulsé est également possible. Le résultat est une suspension homogène de nanoparticules de Co/C dont le temps de sédimentation est de l'ordre de 5 à 7 min, ce qui permet d'enchainer avec l'étape de greffage 1320 de la coquille isolante 33.

Le greffage 1320 de la coquille isolante 33 est à réaliser directement après la mise en suspension 1310 des particules dures, avant que ces dernières ne sédimentent. Le greffage 1320 peut consister à introduire 10 mg d'un polymère de fonctionnalisation, soit 0,625 g/L, dans la suspension homogénéisée de nanoparticules de Co/C. Le polymère de fonctionnalisation peut comprendre au moins une terminaison styrène ou anthracène, tel que du polystyrène, du polybutadiène, polyméthacrylate et les copolymères de polystyrène-méthacrylate. Le polymère de fonctionnalisation peut consister en du polystyrène à terminaison pyrène présentant une masse molaire égale à 5,6 kg/mol. Chaque chaine de ce polymère présente avantageusement un groupement pyrène qui crée des interactions π-π avec la surface en carbone des nanoparticules de Co/C. Il s'agit donc d'un greffage non-covalent qui n'endommage pas la couche de protection 32 en carbone et permet de conserver la forte aimantation des nanoparticules de Co/C. La masse molaire du polymère de fonctionnalisation utilisé a été choisie pour obtenir une fine coquille d'isolation électrique 33, par exemple d'une épaisseur égale à 4 nm. Durant le greffage 1320, la sonication est de préférence maintenue pendant 10 min à une puissance de 100 W. Le résultat est une solution stable de particules dures fonctionnalisées 30, chacune constituée d'une nanoparticule de Co/C enrobée par une fine coquille 33 en polystyrène. La fonctionnalisation de surface et la différence d'encombrement stérique liées au greffage 1320 de la coquille 33 permettent d'atteindre un temps de sédimentation des particules dures fonctionnalisées 30 égal à 30 min. Ainsi, l'enchainement avec les étapes subséquentes du procédé 1000 n'est pas critique.

Selon l'exemple, le premier mélange 1400 de la solution mère de matrice 20 et de la solution de nanoparticules isolantes 30 consiste à introduire la solution mère de matrice 20 dans la solution de particules dures fonctionnalisées 30. Durant le premier mélange 1400, la sonication est de préférence maintenue pendant une durée égale à 10 min à une puissance égale à 100 W. Le résultat du premier mélange 1400 est une solution visqueuse où les particules dures fonctionnalisées 30 sont en suspension dans le médium matrice 20. L'ajout du medium matrice 20 augmente le temps de sédimentation qui atteint une valeur d'environ 75 min, ce qui laisse beaucoup de flexibilité pour procéder au deuxième mélange 1500 de la solution de particules douces 10 avec le premier mélange. Dès lors, la préparation 1100 de la solution de particules douces 10, dont le temps de sédimentation est relativement court en raison de la taille relativement grande de ces particules, peut aisément être réalisée après le premier mélange 1400 et avant que ce dernier n'ait eu le temps de sédimenter.

Selon l'exemple, le deuxième mélange 1500 de la solution de particules douces 10 et du premier mélange consiste à introduire la solution de particules douces 10 dans le premier mélange. Le deuxième mélange 1500 consiste plus particulièrement à ajouter la solution de particules douces 10 préparée après le premier mélange 1400 avant que les particules douces 10 n'ait eu le temps de sédimenter, et notamment dans un laps de temps inférieur à 10 min, de préférence inférieur à 3 min, après la préparation 1100 de la solution de particules douces 10. Ainsi, les particules douces 10 de grande taille sont incorporées efficacement, sans perte importante par sédimentation, à la solution stable de particules dures fonctionnalisées 30 en suspension dans le medium matrice 20. Le deuxième mélange reste de façon naturelle en suspension suffisamment longtemps pour permettre une agrégation spontanée des particules dures fonctionnalisées 30 tout autour des particules douces 10 par couplage magnétique et obtenir ainsi un nanocomposite 1 tel qu'illustré sur la figure 2. Il est préférable, mais non nécessaire, de maintenir, durant le deuxième mélange 1500, la sonication pendant une dizaine de minutes à une puissance égale à 100 W pour favoriser l'homogénéisation du deuxième mélange. A l'issue de cette étape, on dispose d'une solution homogène et stable du nanocomposite 1, avec notamment un volume utile de 20 mL chargé à 0,125 g/mL en nanoparticules 10, 30 et à 0,15 g/mL en polymère matriciel. A ces concentrations, le temps de sédimentation des nanoparticules 10, 30, et en particulier des particules douces 30, est supérieur à 30 min, ce qui est un temps suffisant pour permettre la déposition 1600 d'un film du deuxième mélange, par exemple sur une plaque en matériau semi-conducteur par enduction centrifuge.

Selon l'exemple, la déposition 1600 s'effectue à partir de l'étalement d'un volume du deuxième mélange compris entre 1 et 3 mL, dispensé sous la forme d'une goutte au centre d'une plaque en matériau semi-conducteur (ou « wafer » selon la terminologie anglo-saxonne) en rotation. Les conditions classiques de cette déposition par enduction centrifuge correspondent à une accélération constante de 5000 rpm/s, une durée totale égale à 60 s et une vitesse de rotation comprise entre 500 et 2000 rpm. L'épaisseur typique des films obtenus est de quelques microns. Des épaisseurs plus importantes, pouvant atteindre 20 µm et plus, sont atteignables en procédant par double couchage. A l'issue de la déposition 1600, on dispose d'un film uniforme sur toute la surface de la plaque, cette surface pouvant atteindre un diamètre de 200 mm. Le film est caractérisé par une bonne homogénéité dans son épaisseur de la distribution de nanoparticules 10, 30. Comme indiqué plus haut, le film obtenu présente une fraction massique en métal égale à 70 %, soit une fraction volumique en métal d'environ 20 %. Ces caractéristiques répondent aux performances de grande perméabilité et de grande résistivité recherchées.

Selon l'exemple, le séchage 1700 du film s'effectue sur plaque chauffante pendant 10 min à une température égale à 65°C ou 150°C selon que le solvant utilisé est du chloroforme ou de l'anisole.

Il est encore envisagé, après le séchage 1700, de lisser le film de nanocomposite 1 par planarisation et/ou de le transférer. Effectivement, le film peut encore subir un procédé de mise en forme dédié aux films secs, et notamment des pressages à chaud.

Il est à noter que, lorsque les nanoparticules isolantes 30 sont simples en ce qu'elles n'ont pas de propriétés magnétiques ou ont des propriétés magnétiques faibles (oxydes magnétiques), la préparation 1300 de leur solution comprend leur mise en suspension dans un solvant, cette mise en suspension relevant des compétences ordinaires de l'homme du métier. Les étapes subséquentes du procédé d'obtention 1000 sont *mutatis mutandis* les mêmes que celles décrites plus haut selon l'exemple donné, les modifications suggérées relevant des compétences ordinaires de l'homme du métier.

L'invention concerne également un dispositif ou composant microélectronique pour circuit intégré fonctionnant à haute fréquence, et notamment une micro-inductance, comprenant un nanocomposite selon le premier aspect de l'invention.

L'invention concerne encore l'utilisation d'un nanocomposite selon le premier aspect de l'invention dans un dispositif ou composant microélectronique pour circuit intégré fonctionnant à haute fréquence, et notamment une micro-inductance.

Plus particulièrement, une micro-inductance selon l'invention peut comprendre au moins une portion d'une bobine ou spire en un matériau conducteur au moins en partie noyée dans un nanocomposite 1 selon le premier aspect de l'invention.

La bobine, par exemple en cuivre ou en aluminium, peut être planaire ou tridimensionnelle et peut comprendre des organes de connexion. Par exemple, des portions de spire peuvent être disposées dans des plans distincts d'un dispositif éventuellement semi-conducteur et jointes deux à deux par des organes de connexion tels des vias pour former un élément continu enroulé sur lui-même.

Par exemple, la bobine peut être déposée, par exemple par électrodéposition, sur un substrat, tel qu'un wafer, éventuellement recouvert d'un matériau diélectrique, tel que de la silice. Une partie du matériau diélectrique et/ou du substrat peut être gravé par des moyens conventionnels, par exemple par gravure sèche ou humide, pour former un logement dans lequel la bobine est suspendue ; des barres de support peuvent permettre de maintenir la bobine en suspension dans le logement. Ensuite, le logement est au moins partiellement rempli d'un volume du deuxième mélange 1500. Après séchage de ce volume de mélange, au moins une partie de micro-inductance selon l'invention est obtenue.

## Revendications

1. Nanocomposite (1) comprenant :
- Des nanoparticules d'alliage magnétique (10) au moins en partie constituées d'un alliage magnétique doux, et
- Une matrice (20) isolante supportant les nanoparticules d'alliage magnétique (10),
**caractérisé en ce qu'**il comprend en outre des nanoparticules isolantes (30) supportées par la matrice (20) et intercalées entre les nanoparticules d'alliage magnétique (10) de manière à espacer lesdites nanoparticules d'alliage magnétique les unes des autres et ainsi assurer seules l'isolation électrique desdites nanoparticules d'alliage magnétique et supprimer les chemins de conduction électrique de longueur supérieure à 200 nm.

2. Nanocomposite (1) selon la revendication précédente dans lequel le rapport du diamètre des nanoparticules d'alliage magnétique (10) sur le diamètre des nanoparticules isolantes (30) est compris entre 1 et 10, de préférence entre 2 et 4.

3. Nanocomposite (1) selon l'une quelconque des revendications précédentes dans lequel le diamètre des nanoparticules d'alliage magnétique (10) est compris entre 100 nm et 200 nm.

4. Nanocomposite (1) selon l'une quelconque des revendications précédentes dans lequel le diamètre des nanoparticules isolantes (30) est compris entre 10 nm et 70 nm, de préférence entre 20 nm et 50 nm.

5. Nanocomposite (1) selon l'une quelconque des revendications précédentes dans lequel les nanoparticules d'alliage magnétique (10) sont constituées d'un alliage choisi parmi un alliage à base de nickel et de fer comme le permalloy et le supermalloy, d'un alliage à base de fer, d'un alliage à base de cobalt, et d'un alliage à base de fer et de cobalt, avec éventuellement un ou plusieurs éléments d'addition notamment choisis parmi l'aluminium Al, le cuivre Cu, le silicium Si, le titane Ti, le tantale Ta, le molybdène Mo, le bore B, le carbone C et l'azote N.

6. Nanocomposite (1) selon l'une quelconque des revendications précédentes dans lequel au moins une nanoparticule isolante (30) comprend un coeur (31) constitué d'un élément ferromagnétique, tel que le cobalt Co, le fer Fe ou le nickel Ni, une première coquille (32) en carbone ou en graphène entourant le coeur et une deuxième coquille (33) en polymère, tel que le polystyrène, entourant la première coquille.

7. Nanocomposite (1) selon l'une quelconque des revendications précédentes dans lequel la matrice (20) comprend un polymère non conducteur, tel que le polystyrène, le polybutadiène, le polyméthacrylate et les copolymères de polystyrène-méthacrylate, ou tout autre polymère à base de polyéthylène, de polyester, de polyméthylène, de polyuréthane, de polyvinylidène, ou de polyépoxyde.

8. Nanocomposite (1) selon l'une quelconque des revendications précédentes se présentant sous la forme d'au moins un film d'une épaisseur comprise entre 0,1 µm et 100 µm, et avantageusement entre 1 et 20 µm et ayant une fraction massique en métal égale à au moins 50 % et avantageusement 70% voire 90 % et/ou une fraction volumique en métal égale à au moins 15 %, et avantageusement 20% voire 25 %.

9. Procédé d'obtention (1000) d'un nanocomposite (1) selon l'une quelconque des revendications 1 à 8, comprenant :
- La préparation (1100) d'une solution de nanoparticules d'alliage magnétique (10) au moins en partie constituées d'un alliage magnétique doux,
- La préparation (1200) d'une solution mère de matrice (20) isolante,
- La préparation (1300) d'une solution de nanoparticules isolantes (30),
- Un premier mélange (1400) de la solution mère de matrice (20) et de la solution de nanoparticules isolantes (30),
- Un deuxième mélange (1500) de la solution de nanoparticules d'alliage magnétique (10) et du premier mélange,
La préparation (1100) de la solution de nanoparticules d'alliage magnétique (10) comprenant la mise en suspension des nanoparticules d'alliage magnétique (10) dans un solvant par sonication, de manière à ce que les nanoparticules isolantes (30) espacent lesdites nanoparticules d'alliage magnétique les unes des autres et assurent ainsi l'isolation électrique desdites nanoparticules d'alliage magnétique les unes des autres.

10. Procédé d'obtention (1000) selon la revendication précédente dans lequel la solution de nanoparticules d'alliage magnétique (10) présente une concentration massique comprise entre 0,01 et 0,05 g/mL, de préférence égale à 0,025 g/mL, et/ou la solution de nanoparticules isolantes (30) présente une concentration massique comprise entre 0,05 et 0,2 g/mL, de préférence égale à 0,1 g/mL

11. Procédé d'obtention (1000) selon l'une des revendications 9 et 10 dans lequel la puissance de sonication de la solution de nanoparticules d'alliage magnétique (10) est comprise entre 100 et 250 W et de préférence égale à 200 W, et la durée de sonication est inférieure à 10 min, de préférence égale à 2 min.

12. Procédé d'obtention (1000) selon l'une des revendications 9 à 11 dans lequel la préparation (1100) de la solution de nanoparticules d'alliage magnétique (10) est réalisée après le premier mélange (1400).

13. Procédé d'obtention (1000) selon l'une des revendications 9 à 12 dans lequel, chaque nanoparticule isolante (30) comprenant un coeur (31) constitué d'un élément ferromagnétique, tel que le cobalt Co, le fer Fe ou le nickel Ni, une première coquille (32) en carbone ou en graphène entourant le coeur et une deuxième coquille (33) en polymère, tel que le polystyrène, entourant la première coquille, la préparation (1300) de la solution de nanoparticules isolantes (30) comprend :
- la mise en suspension (1310) de nanoparticules comprenant chacune ledit coeur (31) et ladite première coquille (32) dans un solvant par sonication d'une puissance comprise entre 50 et 150 W et de préférence égale à 100 W, et d'une durée inférieure à 30 min de préférence égale à 10 min, puis
- le greffage (1320) de ladite deuxième coquille (33) sur chaque nanoparticule (30) précédemment mise en suspension (1310) par l'introduction d'un polymère de fonctionnalisation comprenant au moins une terminaison styrène ou anthracène, tel que du polystyrène, du polybutadiène, polyméthacrylate et les copolymères de polystyrène-méthacrylate, en maintenant une sonication d'une puissance comprise entre 50 et 150 W de préférence égale à 100W, et d'une durée inférieure à 30 min de préférence égale à 10 min.

14. Procédé d'obtention (1000) selon la revendication précédente dans lequel le premier mélange (1400) de la solution mère de matrice (20) et de la solution de nanoparticules isolantes (30) est réalisé par introduction de la solution mère de matrice (20) dans la solution de nanoparticules isolantes (30), la sonication de cette dernière étant maintenue à une puissance comprise entre 50 et 150 W, et de préférence égale à 100 W, et pour une durée inférieure à 30 min de préférence égale à 10 min.

15. Procédé d'obtention (1000) selon la revendication précédente dans lequel le deuxième mélange (1500) de la solution de nanoparticules d'alliage magnétique (10) et du premier mélange est réalisé dans un laps de temps inférieur à 10 min, de préférence inférieur à 3 min, après la préparation (1100) de la solution de nanoparticules d'alliage magnétique (10), la sonication du premier mélange étant de préférence maintenue à une puissance comprise entre 50 et 150 W, de préférence égale à 100 W, et pour une durée inférieure à 30 min de préférence égale à 10 min.

16. Procédé d'obtention (1000) selon l'une des revendications 9 à 15 dans lequel la sonication est réalisée en plongeant une sonde à ultra-sons directement dans la solution concernée.

17. Procédé d'obtention (1000) selon l'une des revendications 9 à 16 comprenant en outre :
- La déposition (1600) d'un film du deuxième mélange notamment par enduction centrifuge, et
- Le séchage (1700) du film notamment sur une plaque chauffante.

## Patentansprüche

1. Nano-Verbundwerkstoff (1), umfassend:
- Nanopartikel aus magnetischer Legierung (10), die mindestens teilweise aus einer weichen magnetischen Legierung bestehen, und
- eine isolierende Matrix (20), die die Nanopartikel aus magnetischer Legierung (10) trägt,
**dadurch gekennzeichnet, dass** er ferner isolierende Nanopartikel (30) umfasst, die von der Matrix (20) getragen und zwischen den Nanopartikeln aus magnetischer Legierung (10) interkaliert sind, um die Nanopartikel aus magnetischer Legierung voneinander zu beabstanden, und so nur die elektrische Isolierung der Nanopartikel aus magnetischer Legierung zu gewährleisten und die elektrischen Leitungswege mit einer Länge von mehr als 200 nm zu unterdrücken.

2. Nano-Verbundwerkstoff (1) nach dem vorhergehenden Anspruch, wobei das Verhältnis des Durchmessers der Nanopartikel aus magnetischer Legierung (10) zum Durchmesser der isolierenden Nanopartikel (30) zwischen 1 und 10 liegt, vorzugsweise zwischen 2 und 4.

3. Nano-Verbundwerkstoff (1) nach einem der vorhergehenden Ansprüche, wobei der Durchmesser der Nanopartikel aus magnetischer Legierung (10) zwischen 100 nm und 200 nm liegt.

4. Nano-Verbundwerkstoff (1) nach einem der vorhergehenden Ansprüche, wobei der Durchmesser der isolierenden Nanopartikel (30) zwischen 10 nm und 70 nm liegt, vorzugsweise zwischen 20 nm und 50 nm.

5. Nano-Verbundwerkstoff (1) nach einem der vorhergehenden Ansprüche, wobei die Nanopartikel aus magnetischer Legierung (10) aus einer Legierung bestehen, die ausgewählt ist aus einer Legierung, die auf Nickel und Eisen basiert, wie Permalloy und Supermalloy, einer Legierung, die auf Eisen basiert, einer Legierung, die auf Kobalt basiert und einer Legierung, die auf Eisen und Kobalt basiert, optional mit einem oder mehreren Zusatzelementen, insbesondere ausgewählt aus Aluminium Al, Kupfer Cu, Silizium Si, Titan Ti, Tantal Ta, Molybdän Mo, Bor B, Kohlenstoff C und Stickstoff N.

6. Nano-Verbundwerkstoff (1) nach einem der vorhergehenden Ansprüche, wobei mindestens ein isolierendes Nanopartikel (30) einen Kern (31) umfasst, der aus einem ferromagnetischen Element, wie Kobalt Co, Eisen Fe oder Nickel Ni, besteht, wobei eine erste Schale (32) aus Kohlenstoff oder Graphen den Kern umgibt und eine zweite Schale (33) aus Polymer, wie Polystyrol, die erste Schale umgibt.

7. Nano-Verbundwerkstoff (1) nach einem der vorhergehenden Ansprüche, wobei die Matrix (20) ein nichtleitendes Polymer, wie Polystyrol, Polybutadien, Polymethacrylat und Polystyrol-Methacrylat-Copolymere oder ein beliebiges anderes Polymer, umfasst, das auf Polyethylen, Polyester, Polymethylen, Polyurethan, Polyvinyliden oder Polyepoxid basiert.

8. Nano-Verbundwerkstoff (1) nach einem der vorhergehenden Ansprüche, der in Form von mindestens einer Folie mit einer Dicke zwischen 0,1 µm und 100 µm vorliegt, und vorteilhafterweise zwischen 1 und 20 µm, und mit einem Metallmassenanteil von mindestens 50 %, und vorteilhafterweise 70 % oder sogar 90 %, und/oder einem Metallvolumenanteil von mindestens 15 %, und vorteilhafterweise 20 % oder sogar 25 %.

9. Verfahren zur Gewinnung (1000) eines Nano-Verbundwerkstoffes (1) nach einem der Ansprüche 1 bis 8, umfassend:
- die Herstellung (1100) einer Lösung von Nanopartikeln aus magnetischer Legierung (10), die mindestens teilweise aus einer weichen magnetischen Legierung bestehen,
- die Herstellung (1200) einer isolierenden Matrixstammlösung (20),
- die Herstellung (1300) einer Lösung von isolierenden Nanopartikeln (30),
- ein erstes Gemisch (1400) der Matrixstammlösung (20) und der Lösung von isolierenden Nanopartikeln (30),
- ein zweites Gemisch (1500) der Lösung von Nanopartikeln aus magnetischer Legierung (10) und dem ersten Gemisch,
wobei die Herstellung (1100) der Lösung von Nanopartikeln aus magnetischer Legierung (10) das Suspendieren der Nanopartikel aus magnetischer Legierung (10) in einem Lösungsmittel durch Beschallung umfasst, so dass die isolierenden Nanopartikel (30) die Nanopartikel aus magnetischer Legierung voneinander beabstanden und so die elektrische Isolierung der Nanopartikel aus magnetischer Legierung voneinander gewährleistet.

10. Gewinnungsverfahren (1000) nach dem vorhergehenden Anspruch, wobei die Lösung von Nanopartikeln aus magnetischer Legierung (10) eine Massenkonzentration zwischen 0,01 und 0,05 g/mL aufweist, vorzugsweise gleich 0,025 g/mL, und/oder die Lösung von isolierenden Nanopartikeln (30) eine Massenkonzentration zwischen 0,05 und 0,2 g/mL aufweist, vorzugsweise gleich 0,1 g/mL.

11. Gewinnungsverfahren (1000) nach einem der Ansprüche 9 und 10, wobei die Leistung der Beschallung der Lösung von Nanopartikeln aus magnetischer Legierung (10) zwischen 100 und 250 W liegt, und vorzugsweise gleich 200 W ist, und die Beschallungsdauer weniger als 10 min beträgt, vorzugsweise gleich 2 min.

12. Gewinnungsverfahren (1000) nach einem der Ansprüche 9 bis 11, wobei die Herstellung (1100) der Lösung von Nanopartikeln aus magnetischer Legierung (10) nach dem ersten Gemisch (1400) realisiert wird.

13. Gewinnungsverfahren (1000) nach einem der Ansprüche 9 bis 12, wobei jedes isolierende Nanopartikel (30) einen Kern (31) umfasst, der aus einem ferromagnetischen Element, wie Kobalt Co, Eisen Fe oder Nickel Ni, besteht, wobei eine erste Schale (32) aus Kohlenstoff oder Graphen den Kern umgibt und eine zweite Schale (33) aus Polymer, wie Polystyrol, die erste Schale umgibt, wobei die Herstellung (1300) der Lösung von isolierenden Nanopartikeln (30) umfasst:
- das Suspendieren (1310) von Nanopartikeln, die jeweils den Kern (31) und die erste Schale (32) umfassen, in einem Lösungsmittel durch Beschallung mit einer Leistung zwischen 50 und 150 W, und vorzugsweise gleich 100 W, und mit einer Dauer von weniger als 30 min, vorzugsweise gleich 10 min, und anschließend
- die Veredelung (1320) der zweiten Schale (33) auf jedem Nanopartikel (30), das zuvor suspendiert (1310) wurde, durch Einbringen eines Funktionalisierungspolymers, das mindestens ein Styrol- oder Anthracen-Ende, wie Polystyrol, Polybutadien, Polymethacrylat und Polystyrol-Methacrylat-Copolymere, umfasst, wobei eine Beschallung mit einer Leistung zwischen 50 und 150 W aufrechterhalten wird, vorzugsweise gleich 100 W, und mit einer Dauer von weniger als 30 min, vorzugsweise gleich 10 min.

14. Gewinnungsverfahren (1000) nach dem vorhergehenden Anspruch, wobei das erste Gemisch (1400) der Matrixstammlösung (20) und der Lösung von isolierenden Nanopartikeln (30) durch Einbringen der Matrixstammlösung (20) in die Lösung von isolierenden Nanopartikeln (30) realisiert wird, wobei die Beschallung dieser mit einer Leistung zwischen 50 und 150 W aufrechterhalten wird, und vorzugsweise gleich 100 W, und mit eine Dauer von weniger als 30 min, vorzugsweise gleich 10 min.

15. Gewinnungsverfahren (1000) nach dem vorhergehenden Anspruch, wobei das zweite Gemisch (1500) der Lösung von Nanopartikeln aus magnetischer Legierung (10) und des ersten Gemisches in einer Zeitspanne von weniger als 10 min realisiert wird, vorzugsweise weniger als 3 min, nach der Herstellung (1100) der Lösung von Nanopartikeln aus magnetischer Legierung (10), wobei die Beschallung des ersten Gemisches vorzugsweise mit einer Leistung zwischen 50 und 150 W aufrechterhalten wird, vorzugsweise gleich 100 W, und mit einer Dauer von weniger als 30 min, vorzugsweise gleich 10 min.

16. Gewinnungsverfahren (1000) nach einem der Ansprüche 9 bis 15, wobei die Beschallung durch Eintauchen einer Ultraschallsonde direkt in die betreffende Lösung realisiert wird.

17. Gewinnungsverfahren (1000) nach einem der Ansprüche 9 bis 16, ferner umfassend:
- das Abscheiden (1600) einer Folie des zweiten Gemisches, insbesondere durch Rotationsbeschichtung, und
- das Trocknen (1700) der Folie insbesondere auf einer Heizplatte.

## Claims

1. The nanocomposite (1) comprising:
- Magnetic alloy nanoparticles (10) at least partly consisting of a soft magnetic alloy,
- An insulating matrix (20) supporting the magnetic alloy nanoparticles (10),
**characterised in that** it further comprises insulating nanoparticles (30) supported by the matrix (20) and interposed between the magnetic alloy nanoparticles (10) so as to space said magnetic alloy nanoparticles from each other and thus ensure, alone, the electrical insulation of said magnetic alloy nanoparticles and eliminate the electrical conduction paths of length greater than 200 nm.

2. The nanocomposite (1) according to the preceding claim, wherein the ratio of the diameter of the magnetic alloy nanoparticles (10) to the diameter of the insulating nanoparticles (30) is comprised between 1 and 10, preferably between 2 and 4.

3. The nanocomposite (1) according to any one of the preceding claims, wherein the diameter of the magnetic alloy nanoparticles (10) is comprised between 100 nm and 200 nm.

4. The nanocomposite (1) according to any one of the preceding claims, wherein the diameter of the insulating nanoparticles (30) is comprised between 10 nm and 70 nm, preferably between 20 nm and 50 nm.

5. The nanocomposite (1) according to any one of the preceding claims, wherein the magnetic alloy nanoparticles (10) consist of an alloy selected from an alloy based on nickel and iron such as permalloy and supermalloy, of an alloy based on iron, an alloy based on cobalt, and an alloy based on iron and cobalt, optionally with one or more addition elements selected in particular from aluminium Al, copper Cu, silicon Si, titanium Ti, tantalum Ta, molybdenum Mo, boron B, carbon C and nitrogen N.

6. The nanocomposite (1) according to any one of the preceding claims, wherein at least one insulating nanoparticle (30) comprises a core (31) consisting of a ferromagnetic element, such as cobalt Co, iron Fe or nickel Ni, a first shell (32) made of carbon or graphene surrounding the core and a second shell (33) made of polymer, such as polystyrene, surrounding the first shell.

7. The nanocomposite (1) according to any one of the preceding claims, wherein the matrix (20) comprises a non-conductive polymer, such as polystyrene, polybutadiene, polymethacrylate and polystyrene-methacrylate copolymers, or any other polymer based on polyethylene, polyester, polymethylene, polyurethane, polyvinylidene, or polyepoxide.

8. The nanocomposite (1) according to any one of the preceding claims in the form of at least one film with a thickness comprised between 0.1 µm and 100 µm, and advantageously between 1 and 20 µm and having a mass fraction of metal equal to at least 50% and advantageously 70% or even 90% and/or a volume fraction of metal equal to at least 15% and advantageously 20% or even 25%.

9. A method for producing (1000) a nanocomposite (1) according to any one of claims 1 to 8, comprising:
- The preparation (1100) of a solution of magnetic alloy nanoparticles (10) at least partly consisting of a soft magnetic alloy,
- The preparation (1200) of a stock insulating matrix solution (20),
- The preparation (1300) of a solution of insulating nanoparticles (30),
- A first mixing (1400) of the stock matrix solution (20) and the solution of insulating nanoparticles (30),
- A second mixing (1500) of the solution of magnetic alloy nanoparticles (10) and the first mixture,
The preparation (1100) of the solution of magnetic alloy nanoparticles (10) comprising suspending the magnetic alloy nanoparticles (10) in a solvent by sonication, so that the insulating nanoparticles (30) space said magnetic alloy nanoparticles from each other and thus ensure the electrical insulation of said magnetic alloy nanoparticles from each other.

10. The production method (1000) according to the preceding claim, wherein the solution of magnetic alloy nanoparticles (10) has a mass concentration comprised between 0.01 and 0.05 g/mL, preferably equal to 0.025 g/mL, and/or the solution of insulating nanoparticles (30) has a mass concentration comprised between 0.05 and 0.2 g/mL, preferably equal to 0.1 g/mL

11. The production method (1000) according to one of claims 9 and 10, wherein the sonication power of the solution of magnetic alloy nanoparticles (10) is comprised between 100 and 250 W and preferably equal to 200 W, and the sonication duration is less than 10 min, preferably equal to 2 min.

12. The production method (1000) according to one of claims 9 to 11, wherein the preparation (1100) of the solution of magnetic alloy nanoparticles (10) is carried out after the first mixing (1400).

13. The production method (1000) according to one of claims 9 to 12 wherein each insulating nanoparticle (30) comprising a core (31) consisting of a ferromagnetic element, such as cobalt Co, iron Fe or nickel Ni, a first shell (32) made of carbon or graphene surrounding the core and a second shell (33) made of polymer, such as polystyrene, surrounding the first shell, the preparation (1300) of the solution of insulating nanoparticles (30) comprises:
- the suspension (1310) of nanoparticles each comprising said core (31) and said first shell (32) in a solvent by sonication with a power comprised between 50 and 150 W and preferably equal to 100 W, and a duration of less than 30 min, preferably equal to 10 min, then
- the grafting (1320) of said second shell (33) onto each nanoparticle (30) previously suspended (1310) by introducing a functionalisation polymer comprising at least one styrene or anthracene terminal, such as polystyrene, polybutadiene, polymethacrylate and polystyrene-methacrylate copolymers, while maintaining sonication with a power comprised between 50 and 150 W, preferably equal to 100 W, and for a duration of less than 30 min, preferably equal to 10 min.

14. The production method (1000) according to the preceding claim, wherein the first mixing (1400) of the stock matrix solution (20) and the solution of insulating nanoparticles (30) is carried out by introducing the stock matrix solution (20) in the solution of insulating nanoparticles (30), the sonication of the latter being maintained at a power comprised between 50 and 150W, and preferably equal to 100W, and for a duration of less than 30 min, preferably equal to 10 min.

15. The production method (1000) according to the preceding claim, wherein the second mixing (1500) of the solution of magnetic alloy nanoparticles (10) and the first mixture is carried out in a period of time less than 10 min, preferably less than 3 min, after the preparation (1100) of the solution of magnetic alloy nanoparticles (10), the sonication of the first mixture being preferably maintained at a power comprised between 50 and 150 W, preferably equal to 100 W, and for a duration of less than 30 min, preferably equal to 10 min.

16. The production method (1000) according to one of claims 9 to 15, wherein the sonication is carried out by immersing an ultrasound probe directly into the concerned solution.

17. The production method (1000) according to one of claims 9 to 16 further comprising:
- The deposition (1600) of a film of the second mixture in particular by centrifugal coating, and
- The drying (1700) of the film, in particular on a hot plate.
